# EUROPEAN PATENT APPLICATION

(11) **EP 3 133 473 A1**
(43) Date of publication of application: **22.02.2017**
(21) Application number: 16185043.3
(22) Date of filing: 19.08.2016
(51) Int. Cl.: G06F 3/041, G06F 3/044

(54) **METHOD OF SENSING PRESSURE BY TOUCH SENSOR AND ELECTRONIC DEVICE ADAPTED THERETO**

(30) Priority: 19.08.2015 KR 20150116886
(71) Applicant: Samsung Electronics Co., Ltd., Suwon-si, Gyeonggi-do 16677 (KR)
(72) Inventor: Kim, Minsoo, 16677 Gyeonggi-do (KR); Jeong, Youngtae, 16677 Gyeonggi-do (KR); Yang, Chulhyung, 16677 Gyeonggi-do (KR); Lee, Jiwoo, 16677 Gyeonggi-do (KR)
(74) Representative: Jenkins, Richard Gavin

(57) **Abstract**

An electronic device includes a display (160), a touch panel (252) with a number of electrodes placed on the display, a processor (120) electrically connected to the display and the touch panel, and a memory (130) electrically connected to the processor. The memory stores instructions which enable the processor to receive a user input applied to at least part of the touch panel, add changes in capacitance formed among at least part of the electrodes, in response to the user input, and determine a level of pressure of the user input against the touch panel, based on a sum of capacitance changes.

## Description

### TECHNICAL FIELD

The present disclosure relates to an electronic device and a method of recognizing touches applied thereto. More particularly, the present disclosure relates to a method of detecting pressure by using a touch sensor included in a touch display panel of electronic devices.

### BACKGROUND

Mobile terminals refer to electronic devices capable of providing users with various functions, such as wireless communication, network access, digital broadcast reception, and the like, so that the users can use the functions anywhere, anytime. With the development of electronic communication technology, mobile terminals allow users to use more various functions. Unlike existing mobile terminals configured to provide only preset functions, recent electronic devices, such as smartphones, tablet personal computers (PCs), and the like, have downloaded various applications from application markets, such as App Store, and the like, and installed them therein, thereby allowing user to functions via the applications.

Most mobile terminals have been equipped with a touch panel. Touch panels refer to an input device configured to detect a user's finger or an input tool, such as a stylus pen, and the like, touching or contacting a particular portion of a screen showing a command, thereby executing the command and providing the function. Touch panels may be configured together with displays, such as a liquid crystal display (LCD), an organic light emitting diode (OLED), or a combination thereof, and the like. In this case, the touch panels serve to provide displaying and inputting functions, i.e., touch screen, so that users can input touches to the screen with the finger or a stylus pen, while viewing the screen.

Touch panels may be implemented as various types, e.g., surface acoustic wave type, infrared beam type, resistive type, capacitive type, and the like. Resistive type and capacitive type of touch panels have been commonly employed by mobile terminals.

In recent years, touch panels have been equipped with pressure sensors for measuring levels of pressure of a touch applied thereto. In general, pressure sensors are placed at outer edges of a touch panel to prevent the visibility of the touch panel from being reduced. Therefore, when a touch panels with pressure sensors is installed to electronic devices, it can more optimally control the electronic devices, using levels of touch inputs detected by the pressure sensors, as well as the touch inputs.

Touch panels with pressure sensors are advantageous in that they can easily detect a level of pressure from a contact region to which a touch is applied, in comparison with an existing capacitive type of touch panels. However, since touch panels with pressure sensors are configured in such a way to have a gap to measure a change in distance between two electrodes, this configuration makes it difficult for them to be applied to mobile terminals. In addition, since touch panels with pressure sensors are configured in such a way to have a center axis and a mobile axis, they are disadvantageous in that not all spots by a touch may be clicked against them. Additionally, since touch panels with pressure sensors need to include additional sensors for detecting change in capacitance according to pressure, they may increase the thickness of mobile terminals in the Z axis and also the manufacturing costs.

Therefore, a need exits for a method of detecting pressure by using a touch sensor included in a touch display panel of electronic devices.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a method of detecting pressure by using a touch sensor included in a touch display panel of electronic devices.

In accordance with an aspect of the present disclosure, an electronic device is provided. The electronic device includes a display, a touch panel with a number of electrodes, placed on the display, a processor electrically connected to the display and the touch panel, and a memory electrically connected to the processor.

In the aspect of the present disclosure, the memory stores instructions which enable the processor to receive a user input applied to at least part of the touch panel, add changes in capacitance formed among at least part of the electrodes, in response to the user input, and determine a level of pressure of the user input against the touch panel, based on a sum of capacitance changes.

In various embodiments of the present disclosure, the instructions enable the processor to determine a rate of change in capacitance caused by the user input for a preset period of time, compare, when the determined rate of change is a first rate, a sum of capacitance changes with a first reference value to determine the level of pressure, and compare, when the determined rate of change is a second rate, the sum of capacitance changes with a second reference value to determine the level of pressure.

In various embodiments of the present disclosure, the references values that the processor uses to determine the level of pressure are determined in the process of designing the electronic device and stored in the memory.

In various embodiments of the present disclosure, the processor receives touch pressure of a user's individual fingers, transmits data corresponding to the received touch pressure to a server, receives a reference value matching the data from the server, and updates reference values stored in the memory, using the received reference value.

In various embodiments of the present disclosure, the processor sets a pattern of change in touch pressure of the user's fingers, based on the updated reference values, and stores the user identification information matching the pattern.

In various embodiments of the present disclosure, the sum of capacitance changes is produced by adding changes in capacitance formed between electrodes corresponding to areas of the touch panel to which touches are directly applied to. In addition, the sum of capacitance changes is corrected by further including a change in capacitance formed between electrodes of areas of the touch panel to which touches are not directly applied.

In various embodiments of the present disclosure, the instructions enable the processor to receive multi-touches applied to at least part of the touch panel, add changes in capacitance formed by the multi-touches, compare the sum of capacitance changes by the multi-touches with a reference value, and determine the level of pressure based on the comparison result.

In accordance with another aspect of the present disclosure, an electronic device is provided. The electronic device includes a display, a touch panel placed on the display, a processor electrically connected to the display and the touch panel, and a memory electrically connected to the processor. The memory stores instructions which enable the processor to receive a first user input touching a contact region of a selected area on the touch panel, with a first level of pressure, for a selected period of time from a time point that the first user input is applied, execute a first function in response to the first user input, receive a second user input touching another contact region of the same selected area on the touch panel, with a second level of pressure, for the selected period of time from a time point that the second user input is applied, and execute a second function, which differs in type or in degree from the first unction, in response to the second user input.

In various embodiments of the present disclosure, the instructions enable the processor to execute the first function after the selected period of time has elapsed from the time point that the first user input is applied, and execute the second function after the selected period of time has elapsed from the time point that the second user input is applied.

In various embodiments of the present disclosure, the first and second user inputs are applied to individual contact regions of the selected area on the touch panel, with a third level of pressure, after the selected period of time has elapsed.

In various embodiments of the present disclosure, the touch panel includes first and second electrodes, and the instructions enable the processor to obtain plane coordinates of the first or second user input, based on a change in capacitance formed between the first and second electrodes.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following detailed description taken in conjunction with the accompanying drawings, in which:
FIG. 1 is a block diagram illustrating a configuration of an electronic device according to various embodiments of the present disclosure;
FIG. 2 is a block diagram illustrating a configuration of an electronic device according to embodiments of the present disclosure;
FIG. 3 is a block diagram illustrating a configuration of a program module according to various embodiments of the present disclosure;
FIG. 4 is a flowchart illustrating a method of detecting pressure using a touch sensor according to various embodiments of the present disclosure;
FIGS. 5A to 5E illustrate diagrams that describe a method of adding changes using coordinates of a contact region to which a touch is directly applied according to various embodiments of the present disclosure;
FIGS. 6A to 6D illustrate diagrams that describe a method of calculating changes, using additional coordinates of a non-contact region to which a touch is not directly applied according to various embodiments of the present disclosure;
FIGS. 7A and 7B illustrate a graph of a calculation result of changes of ADC CODE detected by a touch over a certain period of time, according to various embodiments of the present disclosure;
FIG. 8 is a reference value table for determining a level of pressure, based on a sum of capacitance changes according to various embodiments of the present disclosure;
FIGS. 9A to 9C are diagrams that describe a method of updating reference values, considering user inputs, according to various embodiments of the present disclosure; and
FIGS. 10A and 10B are diagrams that describe a method of detecting pressure corresponding to multi-touch inputs according to various embodiments of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

The expressions, such as "include" and "may include" which may be used in the present disclosure denote the presence of the disclosed functions, operations, and constituent elements and do not limit one or more additional functions, operations, and constituent elements. In an embodiment of the present disclosure, the terms, such as "include" and/or "have" may be construed to denote a certain characteristic, number, operation, constituent element, component or a combination thereof, but may not be construed to exclude the existence of or a possibility of addition of one or more other characteristics, numbers, operations, constituent elements, components or combinations thereof.

Furthermore, in the present disclosure, the expression "and/or" includes any and all combinations of the associated listed words. For example, the expression "A and/or B" may include A, may include B, or may include both A and B.

In an embodiment of the present disclosure, expressions including ordinal numbers, such as "first" and "second," and the like, may modify various elements. However, such elements are not limited by the above expressions. For example, the above expressions do not limit the sequence and/or importance of the elements. The above expressions are used merely for the purpose to distinguish an element from the other elements. For example, a first user device and a second user device indicate different user devices although both of them are user devices. For example, a first element could be termed a second element, and similarly, a second element could be also termed a first element without departing from the scope of the present disclosure.

In the case where a component is referred to as being "connected" or "accessed" to other component, it should be understood that not only the component is directly connected or accessed to the other component, but also there may exist another component between them. Meanwhile, in the case where a component is referred to as being "directly connected" or "directly accessed" to other component, it should be understood that there is no component therebetween. The terms used in the present disclosure are only used to describe specific various embodiments of the present disclosure, and are not intended to limit the present disclosure. As used herein, the singular forms are intended to include the plural forms as well, unless the context clearly indicates otherwise. Singular forms are intended to include plural forms unless the context clearly indicates otherwise.

An electronic device according to the present disclosure may be a device including a communication function. For example, the device corresponds to a combination of at least one of a smartphone, a tablet personal computer (PC), a mobile phone, a video phone, an e-book reader, a desktop PC, a laptop PC, a netbook computer, a personal digital assistant (PDA), a portable multimedia player (PMP), a digital audio player, a mobile medical device, an electronic bracelet, an electronic necklace, an electronic accessory, a camera, a wearable device, an electronic clock, a wrist watch, home appliances (for example, an air-conditioner, vacuum, an oven, a microwave, a washing machine, an air cleaner, and the like), an artificial intelligence robot, a television (TV), a digital versatile disc (DVD) player, an audio device, various medical devices (for example, magnetic resonance angiography (MRA), magnetic resonance imaging (MRI), computed tomography (CT), a scanning machine, a ultrasonic wave device, and the like), a navigation device, a global positioning system (GPS) receiver, an event data recorder (EDR), a flight data recorder (FDR), a set-top box, a TV box (for example, Samsung HomeSync^{™}, Apple TV^{™}, or Google TV^{™}), an electronic dictionary, vehicle infotainment device, an electronic equipment for a ship (for example, navigation equipment for a ship, gyrocompass, and the like), avionics, a security device, electronic clothes, an electronic key, a camcorder, game consoles, a head-mounted display (HMD), a flat panel display device, an electronic frame, an electronic album, furniture or a portion of a building/structure that includes a communication function, an electronic board, an electronic signature receiving device, a projector, and the like. It is obvious to those skilled in the art that the electronic device according to the present disclosure is not limited to the aforementioned devices.

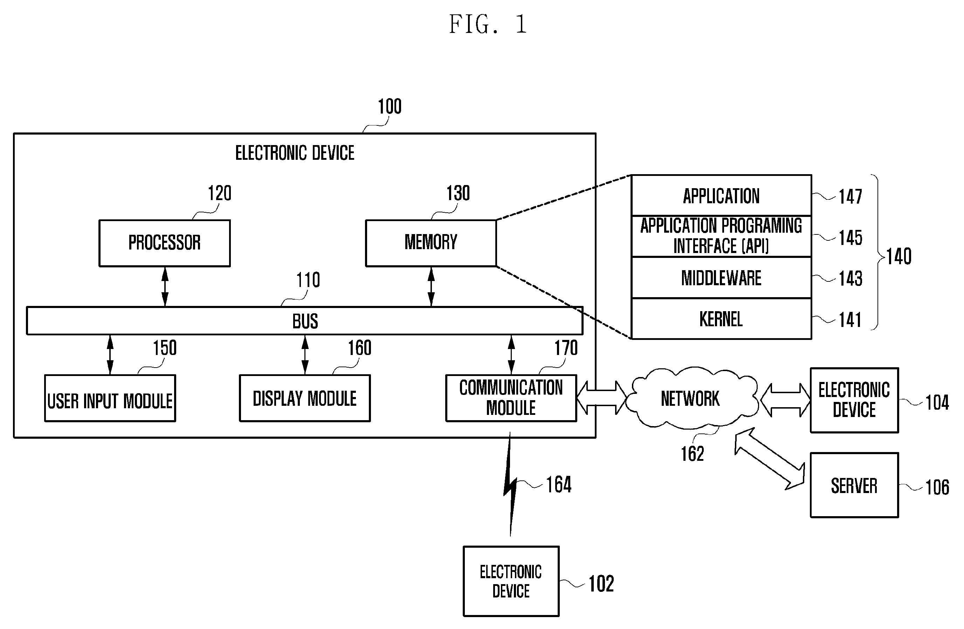

FIG. 1 is a block diagram illustrating a configuration of an electronic device according to an embodiment of the present disclosure.

Referring to FIG. 1, an electronic device 100 may include a bus 110, a processor 120, a memory 130, a user input module 150, a display module 160, a communication module 170, and other similar and/or suitable components.

The bus 110 may be a circuit which interconnects the above-described elements and delivers a communication (e.g., a control message) between the above-described elements.

The processor 120 may receive commands from the above-described other elements (e.g., the memory 130, the user input module 150, the display module 160, the communication module 170, and the like) through the bus 110, may interpret the received commands, and may execute calculation or data processing according to the interpreted commands.

The memory 130 may store commands or data received from the processor 120 or other elements (e.g., the user input module 150, the display module 160, the communication module 170, and the like) or generated by the processor 120 or the other elements. The memory 130 may include programming modules, such as a kernel 141, middleware 143, an application programming interface (API) 145, an application 147, and the like. Each of the above-described programming modules may be implemented in software, firmware, hardware, or a combination of two or more thereof.

The kernel 141 may control or manage system resources (e.g., the bus 110, the processor 120, the memory 130, and the like) used to execute operations or functions implemented by other programming modules (e.g., the middleware 143, the API 145, and the application 147). In addition, the kernel 141 may provide an interface capable of accessing and controlling or managing the individual elements of the electronic device 100 by using the middleware 143, the API 145, or the application 147.

The middleware 143 may serve to go between the API 145 or the application 147 and the kernel 141 in such a manner that the API 145 or the application 147 communicates with the kernel 141 and exchanges data therewith. In addition, in relation to work requests received from one or more applications 140 and/or the middleware 143, for example, may perform load balancing of the work requests by using a method of assigning a priority, in which system resources (e.g., the bus 110, the processor 120, the memory 130, and the like) of the electronic device 100 can be used, to at least one of the one or more applications 140.

The API 145 is an interface through which the application 147 is capable of controlling a function provided by the kernel 141 or the middleware 143, and may include, for example, at least one interface or function for file control, window control, image processing, character control, and the like.

The user input module 150, for example, may receive a command or data as input from a user, and may deliver the received command or data to the processor 120 or the memory 130 through the bus 110. The display module 160 may display a video, an image, data, and the like, to the user.

The communication module 170 may connect communication between another electronic device 102 and the electronic device 100. The communication module 170 may support a short-range communication protocol 164 (e.g., Wi-Fi, Bluetooth (BT), and near field communication (NFC)), or a network communication 162 (e.g., the Internet, a local area network (LAN), a wide area network (WAN), a telecommunication network, a cellular network, a satellite network, a plain old telephone service (POTS), and the like). Each of the electronic devices 102 and 104 may be a device which is identical (e.g., of an identical type) to or different (e.g., of a different type) from the electronic device 100. Further, the communication module 170 may connect communication between a server 106 and the electronic device 100 via the network 162.

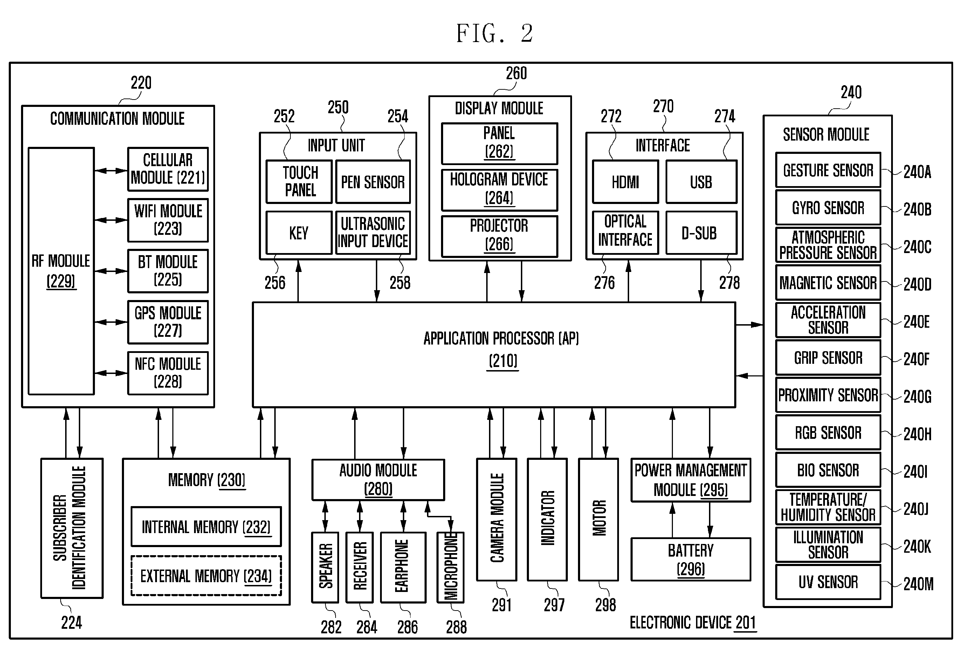

FIG. 2 is a block diagram illustrating a configuration of an electronic device according to an embodiment of the present disclosure.

Referring to FIG. 2, an electronic device 201 may be, for example, the electronic device 100 illustrated in FIG. 1.

Referring to FIG. 2, the electronic device 201 may include one or more processors 210, a subscriber identification module (SIM) card 224, a memory 230, a communication module 220, a sensor module 240, a user input module 250, a display module 260, an interface 270, an audio coder/decoder (codec) 280, a camera module 291, a power management module 295, a battery 296, an indicator 297, a motor 298 and any other similar and/or suitable components.

The processor 210 (e.g., the processor 120) may include one or more application processors (APs), or one or more communication processors (CPs). The processor 210 may be, for example, the processor 120 illustrated in FIG. 1. The AP and the CP are illustrated as being included in the processor 210 in FIG. 2, but may be included in different integrated circuit (IC) packages, respectively. According to an embodiment of the present disclosure, the AP and the CP may be included in one IC package.

The AP may execute an operating system (OS) or an application program, and thereby may control multiple hardware or software elements connected to the AP and may perform processing of and arithmetic operations on various data including multimedia data. The AP may be implemented by, for example, a system on chip (SoC). According to an embodiment of the present disclosure, the processor 210 may further include a graphical processing unit (GPU) (not illustrated).

The CP may manage a data line and may convert a communication protocol in the case of communication between the electronic device (e.g., the electronic device 100) including the electronic device 201 and different electronic devices connected to the electronic device through the network. The CP may be implemented by, for example, an SoC. According to an embodiment of the present disclosure, the CP may perform at least some of multimedia control functions. The CP, for example, may distinguish and authenticate a terminal in a communication network by using a SIM (e.g., the SIM card 224). In addition, the CP may provide the user with services, such as a voice telephony call, a video telephony call, a text message, packet data, and the like.

Further, the CP may control the transmission and reception of data by the communication module 220. In FIG. 2, the elements, such as the CP, the power management module 295, the memory 230, and the like are illustrated as elements separate from the AP. However, according to an embodiment of the present disclosure, the AP may include at least some (e.g., the CP) of the above-described elements.

According to an embodiment of the present disclosure, the AP or the CP may load, to a volatile memory, a command or data received from at least one of a non-volatile memory and other elements connected to each of the AP and the CP, and may process the loaded command or data. In addition, the AP or the CP may store, in a non-volatile memory, data received from or generated by at least one of the other elements.

The SIM card 224 may be a card implementing a SIM, and may be inserted into a slot formed in a particular portion of the electronic device 100. The SIM card 224 may include unique identification information (e.g., integrated circuit card identifier (ICCID)) or subscriber information (e.g., international mobile subscriber identity (IMSI)).

The memory 230 may include an internal memory 232 and an external memory 234. The memory 230 may be, for example, the memory 130 illustrated in FIG. 1. The internal memory 232 may include, for example, at least one of a volatile memory (e.g., a dynamic RAM (DRAM), a static RAM (SRAM), a synchronous dynamic RAM (SDRAM), and the like), and a non-volatile memory (e.g., a one time programmable ROM (OTPROM), a programmable ROM (PROM), an erasable and programmable ROM (EPROM), an electrically erasable and programmable ROM (EEPROM), a mask ROM, a flash ROM, a not AND (NAND) flash memory, a not OR (NOR) flash memory, and the like). According to an embodiment of the present disclosure, the internal memory 232 may be in the form of a solid state drive (SSD). The external memory 234 may further include a flash drive, for example, a compact flash (CF), a secure digital (SD), a micro-SD, a mini-SD, an extreme digital (xD), a memory stick, and the like.

The communication module 220 may include a wireless communication module 231 or a radio frequency (RF) module 229. The communication module 220 may be, for example, the communication module 160 illustrated in FIG. 1. The wireless communication module 231 may include, for example, a Wi-Fi part 233, a BT part 235, a GPS part 237, or a NFC part 239. For example, the wireless communication module 231 may provide a wireless communication function by using an RF. Additionally or alternatively, the wireless communication module 231 may include a network interface (e.g., a LAN card), a modulator/demodulator (modem), and the like for connecting the electronic device 201 to a network (e.g., the Internet, a LAN, a WAN, a telecommunication network, a cellular network, a satellite network, a POTS, and the like).

The communication module 220 (e.g., the communication interface 170) may perform data communication with other electronic devices (e.g., the electronic device 104 and the server 106) through a network. According to an embodiment of the present disclosure, the communication module 220 may include a cellular module 221, a Wi-Fi module 223, a BT module 225, a GPS module 227, an NFC module 228, and a radio frequency (RF) module 229.

The RF module 229 may be used for transmission and reception of data, for example, transmission and reception of RF signals or called electronic signals. Although not illustrated, the RF unit 229 may include, for example, a transceiver, a power amplifier module (PAM), a frequency filter, a low noise amplifier (LNA), and the like. In addition, the RF module 229 may further include a component for transmitting and receiving electromagnetic waves in a free space in a wireless communication, for example, a conductor, a conductive wire, and the like.

The sensor module 240 may include, for example, at least one of a gesture sensor 240A, a gyro sensor 240B, an atmospheric pressure sensor 240C, a magnetic sensor 240D, an acceleration sensor 240E, a grip sensor 240F, a proximity sensor 240G, a red, green and blue (RGB) sensor 240H, a biometric sensor 240I, a temperature/humidity sensor 240J, an illuminance sensor 240K, and an ultra violet (UV) sensor 240M. The sensor module 240 may measure a physical quantity or may detect an operating state of the electronic device 100, and may convert the measured or detected information to an electrical signal. Additionally/alternatively, the sensor module 240 may include, for example, an Electronic nose (E-nose) sensor (not illustrated), an electromyography (EMG) sensor (not illustrated), an electroencephalogram (EEG) sensor (not illustrated), an electrocardiogram (ECG) sensor (not illustrated), a fingerprint sensor (not illustrated), and the like. Additionally or alternatively, the sensor module 240 may include, for example, an E-nose sensor (not illustrated), an EMG sensor (not illustrated), an EEG sensor (not illustrated), an ECG sensor (not illustrated), a fingerprint sensor, and the like. The sensor module 240 may further include a control circuit (not illustrated) for controlling one or more sensors included therein.

The user input module 250 may include a touch panel 252, a pen sensor 254 (e.g., a digital pen sensor), keys 256, and an ultrasonic input unit 258. The user input module 250 may be, for example, the user input module 140 illustrated in FIG. 1. The touch panel 252 may recognize a touch input in at least one of, for example, a capacitive scheme, a resistive scheme, an infrared scheme, and an acoustic wave scheme. In addition, the touch panel 252 may further include a controller (not illustrated). In the capacitive type, the touch panel 252 is capable of recognizing proximity as well as a direct touch. The touch panel 252 may further include a tactile layer (not illustrated). In this event, the touch panel 252 may provide a tactile response to the user.

The pen sensor 254 (e.g., a digital pen sensor), for example, may be implemented by using a method identical or similar to a method of receiving a touch input from the user, or by using a separate sheet for recognition. For example, a key pad or a touch key may be used as the keys 256. The ultrasonic input unit 258 enables the terminal to detect a sound wave by using a microphone (e.g., a microphone 288) of the terminal through a pen generating an ultrasonic signal, and to identify data. The ultrasonic input unit 258 is capable of wireless recognition. According to an embodiment of the present disclosure, the electronic device 201 200 may receive a user input from an external device (e.g., a network, a computer, or a server), which is connected to the communication module 220, through the communication module 220.

The display module 260 may include a panel 262 or a hologram 264. The display module 260 may be, for example, the display module 150 illustrated in FIG. 1. The panel 262 may be, for example, a liquid crystal display (LCD) and an active matrix organic light emitting diode (AM-OLED) display, and the like. The panel 262 may be implemented so as to be, for example, flexible, transparent, or wearable. The panel 262 may include the touch panel 252 and one module. The hologram 264 may display a three-dimensional image in the air by using interference of light. According to an embodiment of the present disclosure, the display module 260 may further include a control circuit for controlling the panel 262 or the hologram 264.

The interface 270 may include, for example, a high-definition multimedia interface (HDMI) 272, a universal serial bus (USB) 274, an optical interface 276, and a d-subminiature (D-sub) 278. Additionally or alternatively, the interface 270 may include, for example, SD/multi-media card (MMC) (not illustrated) or infrared data association (IrDA) (not illustrated).

The audio codec 280 may bidirectionally convert between a voice and an electrical signal. The audio codec 280 may convert voice information, which is input to or output from the audio codec 280, through, for example, a speaker 282, a receiver 284, an earphone 286, the microphone 288, and the like.

The camera module 291 may capture an image and a moving image. According to an embodiment of the present disclosure, the camera module 291 may include one or more image sensors (e.g., a front lens or a back lens), an image signal processor (ISP) (not illustrated), and a flash LED (not illustrated).

The power management module 295 may manage power of the electronic device 201. Although not illustrated, the power management module 295 may include, for example, a power management integrated circuit (PMIC), a charger integrated circuit (IC), or a battery fuel gauge.

The PMIC may be mounted to, for example, an IC or an SoC semiconductor. Charging methods may be classified into a wired charging method and a wireless charging method. The charger IC may charge a battery, and may prevent an overvoltage or an overcurrent from a charger to the battery. According to an embodiment of the present disclosure, the charger IC may include a charger IC for at least one of the wired charging method and the wireless charging method. Examples of the wireless charging method may include a magnetic resonance method, a magnetic induction method, an electromagnetic method, and the like. Additional circuits (e.g., a coil loop, a resonance circuit, a rectifier, and the like) for wireless charging may be added in order to perform the wireless charging.

The battery fuel gauge may measure, for example, a residual quantity of the battery 296, or a voltage, a current or a temperature during the charging. The battery 296 may supply power by generating electricity, and may be, for example, a rechargeable battery.

The indicator 297 may indicate particular states of the electronic device 201 or a part (e.g., the AP) of the electronic device 201 200, for example, a booting state, a message state, a charging state and the like. The motor 298 may convert an electrical signal into a mechanical vibration. The processor 210 may control the sensor module 240.

Although not illustrated, the electronic device 201 may include a processing unit (e.g., a GPU) for supporting a module TV. The processing unit for supporting a module TV may process media data according to standards, such as, for example, digital multimedia broadcasting (DMB), digital video broadcasting (DVB), media flow, and the like. Each of the above-described elements of the electronic device 201 according to an embodiment of the present disclosure may include one or more components, and the name of the relevant element may change depending on the type of electronic device. The electronic device 201 according to an embodiment of the present disclosure may include at least one of the above-described elements. Some of the above-described elements may be omitted from the electronic device 201, or electronic device 201 may further include additional elements. In addition, some of the elements of the electronic device 201 according to an embodiment of the present disclosure may be combined into one entity, which may perform functions identical to those of the relevant elements before the combination.

The term "module" used in the present disclosure may refer to, for example, a unit including one or more combinations of hardware, software, and firmware. The "module" may be interchangeable with a term, such as "unit," "logic," "logical block," "component," "circuit," and the like. The "module" may be a minimum unit of a component formed as one body or a part thereof. The "module" may be a minimum unit for performing one or more functions or a part thereof. The "module" may be implemented mechanically or electronically. For example, the "module" according to an embodiment of the present disclosure may include at least one of an application-specific integrated circuit (ASIC) chip, a field-programmable gate array (FPGA), and a programmable-logic device for performing certain operations which have been known or are to be developed in the future.

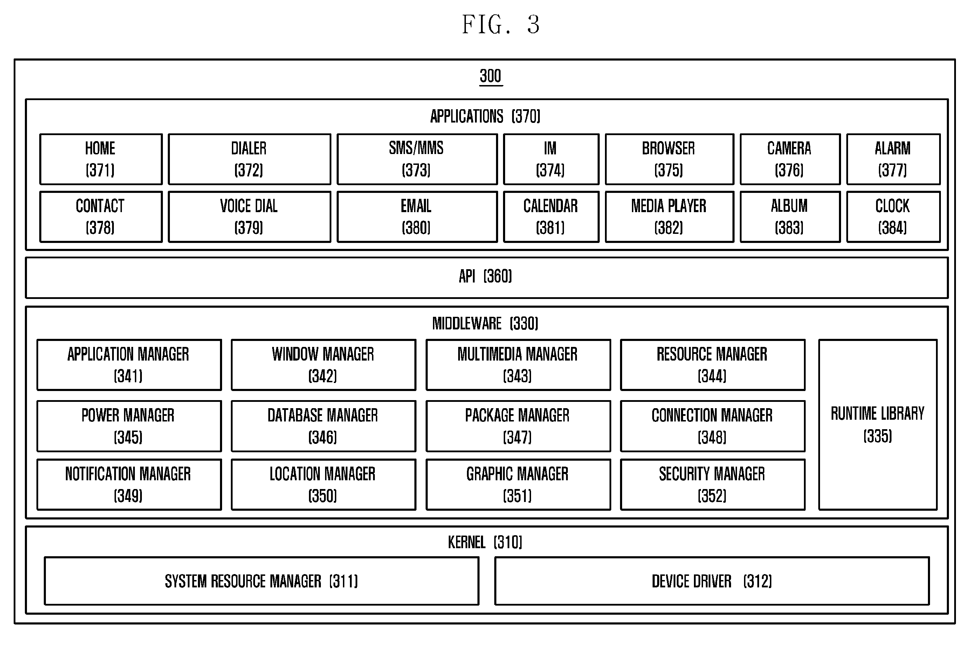

FIG. 3 is a block diagram illustrating a configuration of a programming module according to an embodiment of the present disclosure.

Referring to FIG. 3, a programming module 300 may be included (or stored) in the electronic device 100 (e.g., the memory 130) or may be included (or stored) in the electronic device 200 (e.g., the memory 230) illustrated in FIG. 1. At least a part of the programming module 300 may be implemented in software, firmware, hardware, or a combination of two or more thereof. The programming module 300 may be implemented in hardware (e.g., the electronic device 201 200), and may include an OS controlling resources related to an electronic device (e.g., the electronic device 100) and/or various applications (e.g., an application 370) executed in the OS. For example, the OS may be Android, iOS, Windows, Symbian, Tizen, Bada, and the like.

Referring to FIG. 3, the programming module 300 may include a kernel 310, a middleware 330, an API 360, and/or the application 370.

The kernel 310 (e.g., the kernel 141) may include a system resource manager 311 and/or a device driver 312. The system resource manager 311 may include, for example, a process manager (not illustrated), a memory manager (not illustrated), and a file system manager (not illustrated). The system resource manager 311 may perform the control, allocation, recovery, and the like of system resources. The device driver 312 may include, for example, a display driver (not illustrated), a camera driver (not illustrated), a BT driver (not illustrated), a shared memory driver (not illustrated), a USB driver (not illustrated), a keypad driver (not illustrated), a Wi-Fi driver (not illustrated), and/or an audio driver (not illustrated). In addition, according to an embodiment of the present disclosure, the device driver 312 may include an inter-process communication (IPC) driver (not illustrated).

The middleware 330 may include multiple modules previously implemented so as to provide a function used in common by the applications 370. In addition, the middleware 330 may provide a function to the applications 370 through the API 360 in order to enable the applications 370 to efficiently use limited system resources within the electronic device. For example, as illustrated in FIG. 3, the middleware 330 (e.g., the middleware 143) may include at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, a security manager 352, and any other suitable and/or similar manager.

The runtime library 335 may include, for example, a library module used by a complier, in order to add a new function by using a programming language during the execution of the application 370. According to an embodiment of the present disclosure, the runtime library 335 may perform functions which are related to input and output, the management of a memory, an arithmetic function, and the like.

The application manager 341 may manage, for example, a life cycle of at least one of the applications 370. The window manager 342 may manage graphical user interface (GUI) resources used on the screen. The multimedia manager 343 may detect a format used to reproduce various media files and may encode or decode a media file through a codec appropriate for the relevant format. The resource manager 344 may manage resources, such as a source code, a memory, a storage space, and the like of at least one of the applications 370.

The power manager 345 may operate together with a basic input/output system (BIOS), may manage a battery or power, and may provide power information and the like used for an operation. The database manager 346 may manage a database in such a manner as to enable the generation, search and/or change of the database to be used by at least one of the applications 370. The package manager 347 may manage the installation and/or update of an application distributed in the form of a package file.

The connectivity manager 348 may manage a wireless connectivity, such as, for example, Wi-Fi and BT. The notification manager 349 may display or report, to the user, an event, such as an arrival message, an appointment, a proximity alarm, and the like in such a manner as not to disturb the user. The location manager 350 may manage location information of the electronic device. The graphic manager 351 may manage a graphic effect, which is to be provided to the user, and/or a user interface related to the graphic effect. The security manager 352 may provide various security functions used for system security, user authentication, and the like. According to an embodiment of the present disclosure, when the electronic device (e.g., the electronic device 100) has a telephone function, the middleware 330 may further include a telephony manager (not illustrated) for managing a voice telephony call function and/or a video telephony call function of the electronic device.

The middleware 330 may generate and use a new middleware module through various functional combinations of the above-described internal element modules. The middleware 330 may provide modules specialized according to types of OSs in order to provide differentiated functions. In addition, the middleware 330 may dynamically delete some of the existing elements, or may add new elements. Accordingly, the middleware 330 may omit some of the elements described in the various embodiments of the present disclosure, may further include other elements, or may replace the some of the elements with elements, each of which performs a similar function and has a different name.

The API 360 (e.g., the API 145) is a set of API programming functions, and may be provided with a different configuration according to an OS. In the case of Android or iOS, for example, one API set may be provided to each platform. In the case of Tizen, for example, two or more API sets may be provided to each platform.

The applications 370 (e.g., the applications 147) may include, for example, a preloaded application and/or a third party application. The applications 370 (e.g., the applications 147) may include, for example, a home application 371, a dialer application 372, a short message service (SMS)/multimedia message service (MMS) application 373, an instant message (IM) application 374, a browser application 375, a camera application 376, an alarm application 377, a contact application 378, a voice dial application 379, an electronic mail (e-mail) application 380, a calendar application 381, a media player application 382, an album application 383, a clock application 384, and any other suitable and/or similar application.

At least a part of the programming module 300 may be implemented by instructions stored in a non-transitory computer-readable storage medium. When the instructions are executed by one or more processors (e.g., the one or more processors 210), the one or more processors may perform functions corresponding to the instructions. The non-transitory computer-readable storage medium may be, for example, the memory 230. At least a part of the programming module 300 may be implemented (e.g., executed) by, for example, the one or more processors 210. At least a part of the programming module 300 may include, for example, a module, a program, a routine, a set of instructions, and/or a process for performing one or more functions.

Names of the elements of the programming module (e.g., the programming module 300) according to an embodiment of the present disclosure may change depending on the type of OS. The programming module according to an embodiment of the present disclosure may include one or more of the above-described elements. Alternatively, some of the above-described elements may be omitted from the programming module. Alternatively, the programming module may further include additional elements. The operations performed by the programming module or other elements according to an embodiment of the present disclosure may be processed in a sequential method, a parallel method, a repetitive method, or a heuristic method. In addition, some of the operations may be omitted, or other operations may be added to the operations.

In an embodiment of the present disclosure, an electronic device is configured to include a display, a touch panel with a number of electrodes, placed on the display, a processor electrically connected to the display and the touch panel, and a memory electrically connected to the processor. The memory stores instructions which enable the processor to receive a user input applied to at least part of the touch panel, add changes in capacitance formed among at least part of the electrodes, in response to the user input, and determine a level of pressure of the user input against the touch panel, based on the sum of capacitance changes.

In an electronic device according to an embodiment of the present disclosure, the instructions enable the processor to determine a rate of change in capacitance caused by the user input for a preset period of time, compare, when the determined rate of change is a first rate, the sum of capacitance changes with a first reference value to determine the level of pressure, and compare, when the determined rate of change is a second rate, the sum of capacitance changes with a second reference value to determine the level of pressure.

In an electronic device according to an embodiment of the present disclosure, the references values that the processor uses to determine the level of pressure are determined in the process of designing the electronic device and are stored in the memory.

In an electronic device according to an embodiment of the present disclosure, the processor receives touch pressure of user's individual fingers, transmits data corresponding to the received touch pressure to a server, receives a reference value matching the data from the server, and updates reference values stored in the memory, using the received reference value.

In an electronic device according to an embodiment of the present disclosure, the processor sets a pattern of change in touch pressure of the user's fingers, based on the updated reference values, and stores the user identification information matching the pattern.

In an electronic device according to an embodiment of the present disclosure, the sum of capacitance changes is produced by adding changes in capacitance formed between electrodes corresponding to areas of the touch panel to which touches are directly applied to. In addition, the sum of capacitance changes is corrected by further including a change in capacitance formed between electrodes of areas of the touch panel to which touches are not directly applied.

In an electronic device according to an embodiment of the present disclosure, the instructions enable the processor to receive multi-touches applied to at least part of the touch panel, add changes in capacitance formed by the multi-touches, compare the sum of capacitance changes by the multi-touches with a reference value, and determine the level of pressure based on the comparison result.

In another embodiment of the present disclosure, an electronic device is configured to include a display, a touch panel placed on the display, a processor electrically connected to the display and the touch panel, and a memory electrically connected to the processor. The memory stores instructions which enable the processor to receive a first user input touching a contact region of a selected area on the touch panel, with a first level of pressure, for a selected period of time from a time point that the first user input is applied, execute a first function in response to the first user input, receive a second user input touching another contact region of the same selected area on the touch panel, with a second level of pressure, for the selected period of time from a time point that the second user input is applied, and execute a second function, which differs in type or in degree from the first unction, in response to the second user input.

In an electronic device according to another embodiment of the present disclosure, the instructions enable the processor to execute the first function after the selected period of time has elapsed from the time point that the first user input is applied, and execute the second function after the selected period of time has elapsed from the time point that the second user input is applied.

In an electronic device according to another embodiment of the present disclosure, the first and second user inputs are applied to individual contact regions of the selected area on the touch panel, with a third level of pressure, after the selected period of time has elapsed.

In an electronic device according to another embodiment of the present disclosure, the touch panel includes first and second electrodes, and the instructions enable the processor to obtain plane coordinates of the first or second user input, based on a change in capacitance formed between the first and second electrodes.

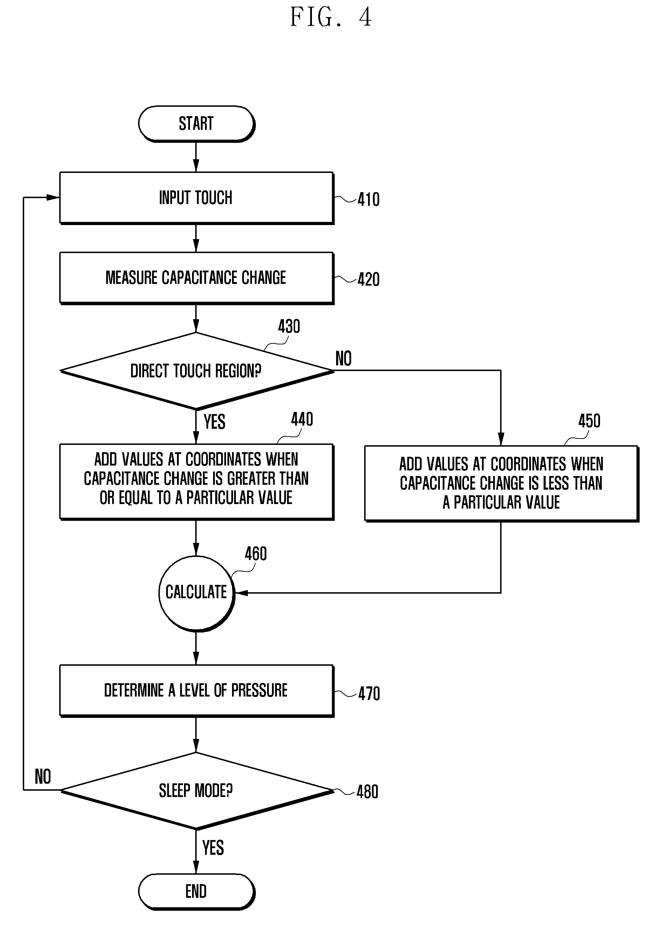

FIG. 4 is a flowchart illustrating a method of detecting pressure using a touch sensor according to various embodiments of the present disclosure. The electronic device according to an embodiment of the present disclosure is capable of including an IC for computing data received from a touch sensor panel (TSP), which is called a TSP IC. The touch panel outputs analog-to-digital converter (ADC) values that vary according to levels of touch pressure. The ISP IC calculates varied values at a number of coordinates detected when the variation of ADC code values is greater than or equal to (or less than) a preset value, and obtains a correlation between pressure and touch based on the calculated values.

Referring to FIG. 4, the ADC code value is created in such a way that when an ADC coverts a voltage corresponding to a capacitance produced according to a touch gesture into a digital value and transfers the converted digital value to the processor via the ADC port, the processor encodes the received digital value. The ADC code values are used to control the electronic device in such a way that it maps an analog input signal to an ADC code value set according to a preset voltage value and performs a function corresponding to the code value, such as outputting letters or numbers, executing an application, and the like. The variation of the ADC code values may be calculated by various calculation formulae, along with the addition of values which are measured at coordinates and greater than or equal to (or less than) a preset value, or by making indexes with the values, and the like.

In an embodiment of the present disclosure, values at coordinates which are greater than or equal to (or less than) a preset value are used to obtain the variation of the ADC code values, and this reduces the effect of noise that may be created in the process of detecting a touch. For example, although touch sensors are not touched by a particular object, they continue to detect the surrounding environments, e.g., touches by air, moisture, and the like. The preset value refers to a value which may be set to reduce noise. The preset value may be set as a default value by device manufactures when electronic devices are designed. Alternatively, the present value may be set by the users of electronic devices. The embodiment sets the preset value to 20 but is not limited thereto. For example, the preset value may be adjusted to be a relatively low value in order to increase the sensitivity or a relatively high value in order to reduce the influence of noise. In order to determine whether the variation of the ADC code values is within a range of the preset value, the reference value, i.e., a RAW value, may be used. The RAW value may be the average of ADC code values measured in the entire touch panel or a value set according to the stings.

The electronic device according to an embodiment of the present disclosure includes a display, a touch panel with a number of electrodes, placed on the display, a processor electrically connected to the display and the touch panel, and a memory electrically connected to the processor. When the processor receives a user input applied to at least part of the touch panel, it adds changes in capacitance (e.g., a change to a RAW value of ADC code) formed among at least part of the electrodes, in response to the user input. The processor determines a level of pressure of the user input against the touch panel, based on the sum of capacitance changes.

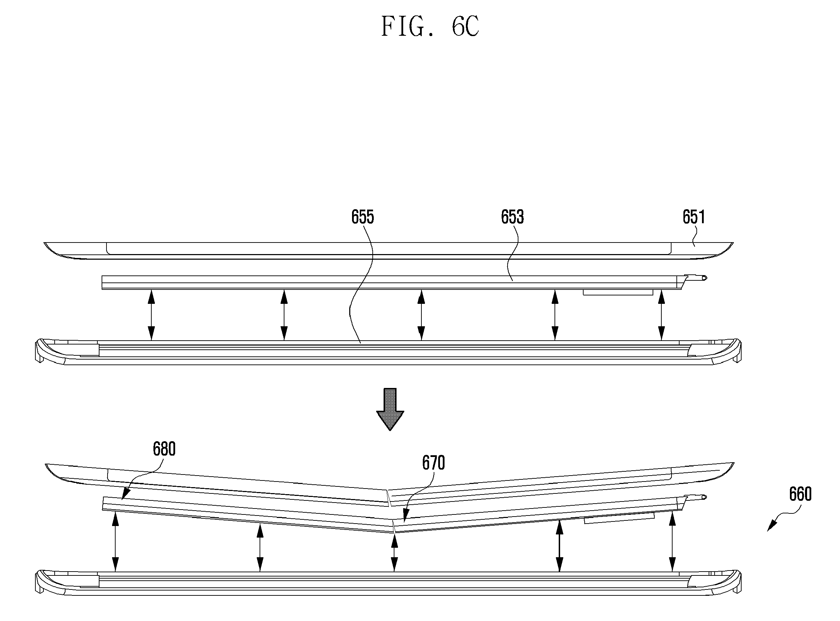

Referring to FIG. 4, when a touch is applied to a touch panel in operation 410, the change in capacitance is measured by a touch sensor in the touch panel in operation 420. Capacitance may vary in a contact region to which a touch is directly applied. Capacitance may also vary in a non-contact region to which a touch is not directly applied, which is shown as in FIG. 6C. In an embodiment referring to FIG. 6C, when a touch is applied to the touch panel 653, the touch pressure may cause a physical deformation in the touch panel 653. The embodiment of the present disclosure obtains and calculates the change in capacitance at a contact region to which a touch is directly applied, and determines a level of touch pressure using the calculated value.

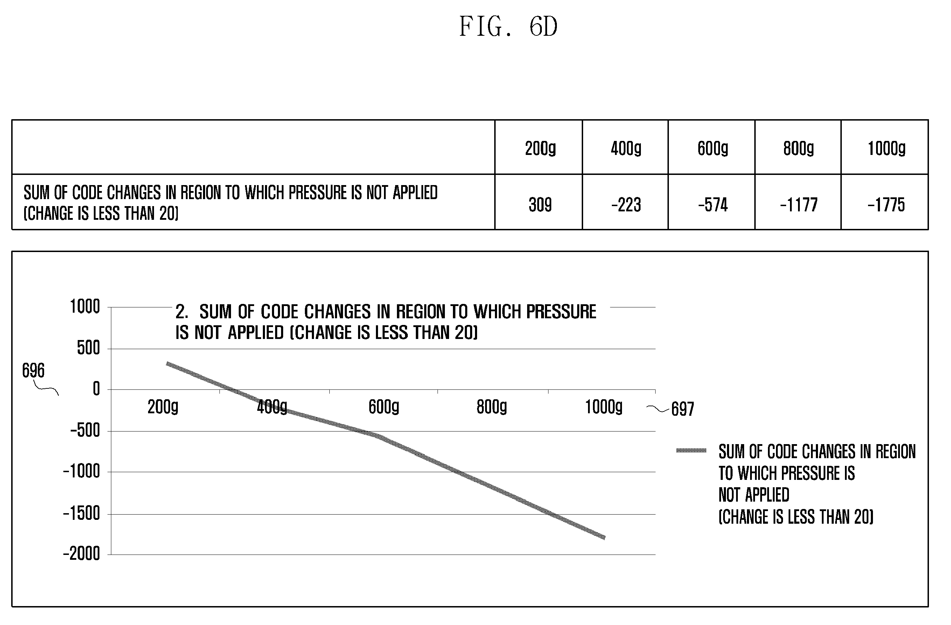

The change in capacitance at a non-contact region to which a touch is not directly applied may have the linearity with pressure as shown in FIG. 6D. Therefore, the value calculated based on the change in capacitance at a non-contact region to which a touch is not directly applied is additionally applied to the result calculated based on the change in capacitance at a contact region to which a touch is directly applied to, thereby correcting the calculation result, removing the errors.

In order to obtain the calculation result, a contact region to which a touch is directly applied needs to be distinguished from a non-contact region to which a touch is not directly applied in operation 430. To this end, a variation of the ADC code values (or the change in capacitance) is measured, and the distinction between a contact region to which a touch is directly applied and a non-contact region to which a touch is not directly applied is performed based on a condition as to whether the measured variation is greater than (or greater than or equal to) a threshold.

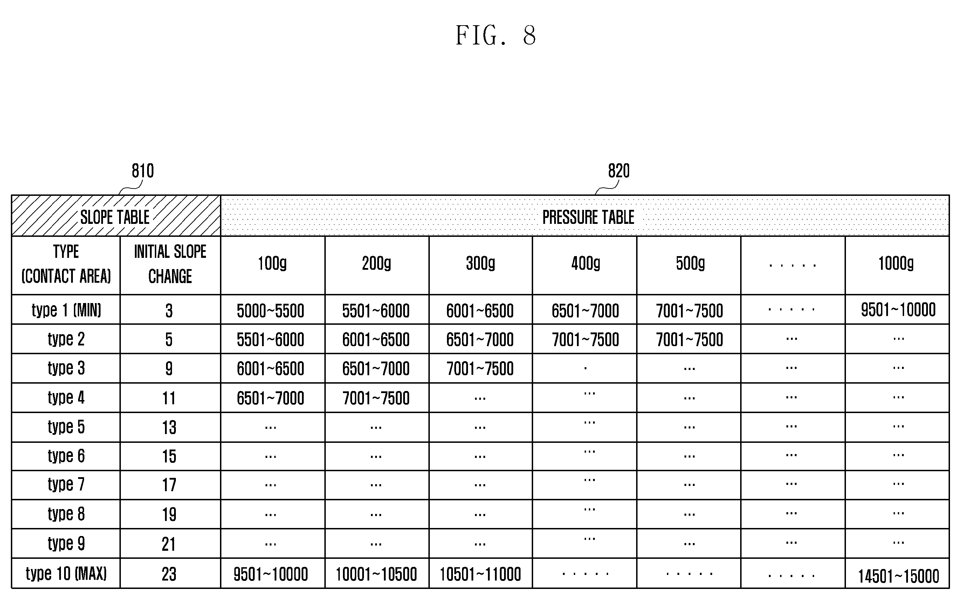

After operation 430, the change in capacitance produced at a contact region to which a touch is directly applied is calculated in operation 440. The change in capacitance produced at a non-contact region to which a touch is not directly applied is calculated in operation 450. Thereafter, the capacitance change at a contact region and the capacitance change at a non-contact region are processed by a calculation method, e.g., addition, indexing, applying weights according to the magnitude of change, and the like, in operation 460. Thereafter, the calculated value is matched with reference values in the table shown in FIG. 8, thereby determining a level of pressure in operation 470.

After determining a level of pressure of the touch applied to the touch panel in operation 470, the electronic device determines whether the touch panel operates in a sleep mode, i.e., whether the touch panel receives an additional touch, in operation 480. When the electronic device ascertains that the touch panel receives an additional touch, i.e., the touch panel does not operate in a sleep mode, in operation 480, it returns to operation 410 and performs processed to determine a level of pressure of the additional touch. On the other hand, when the electronic device ascertains that the touch panel has not received an additional touch, i.e., the touch panel operates in a sleep mode, in operation 480, it ends the procedure.

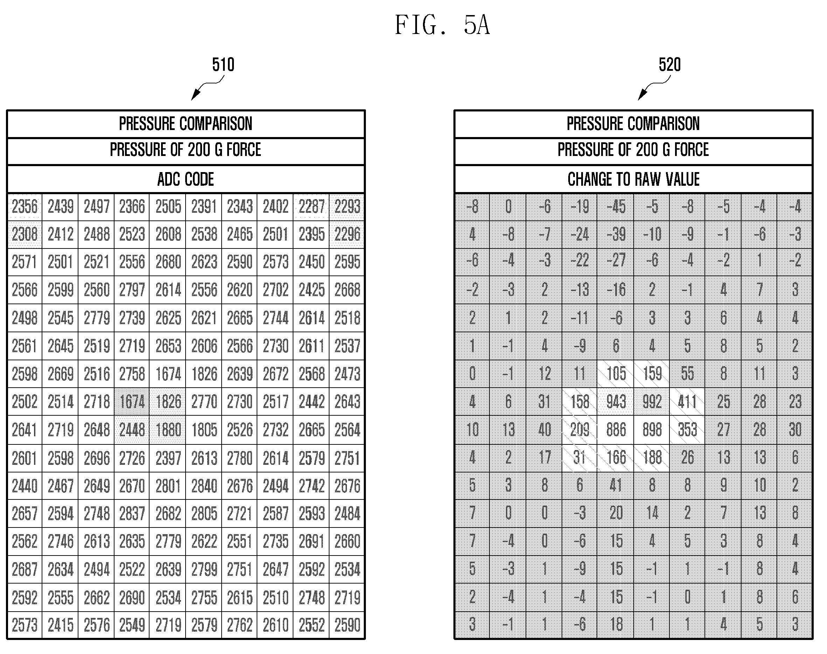

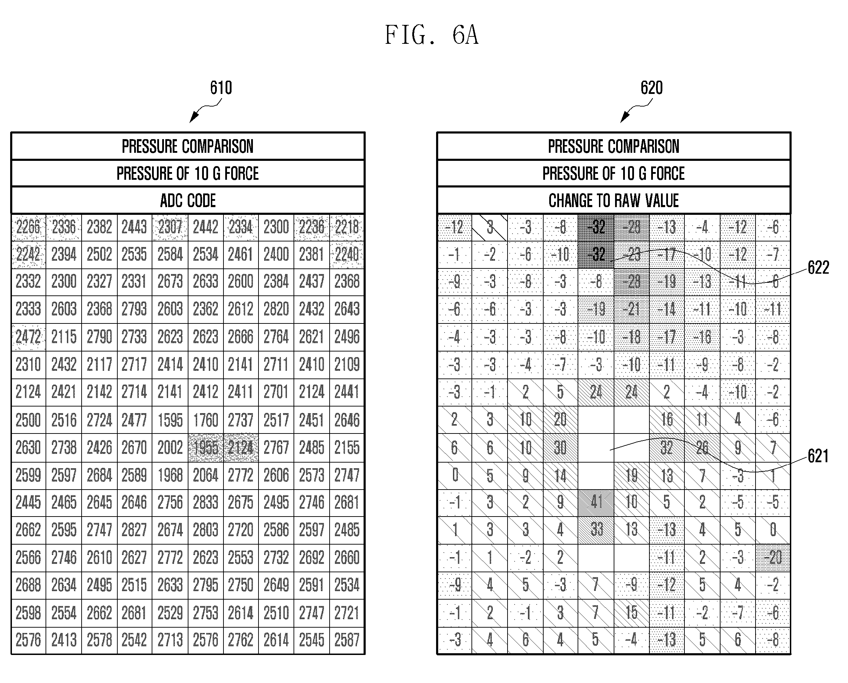

In the following description, methods of calculating changes are described referring to FIGS. 5A to 5E and 6A to 6D.

FIGS. 5A to 5E illustrate diagrams that describe a method of adding changes using coordinates of a contact region to which a touch is directly applied according to various embodiments of the present disclosure.

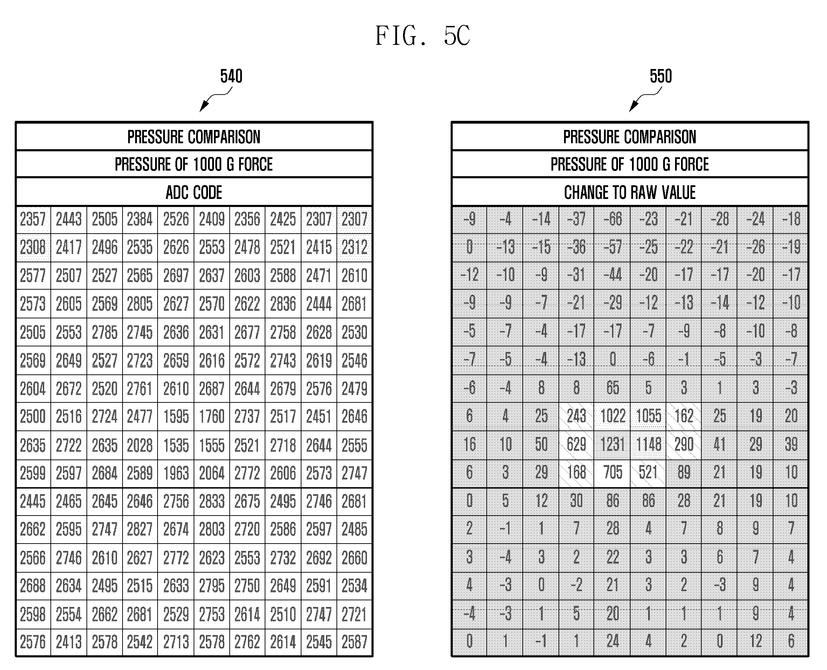

Referring to FIGS. 5A to 5E, diagrams 510 and 520 shown in FIG. 5A (diagrams 540 and 550 shown in FIG. 5C) represent the touch panel of an electronic device. The touch panel includes cells (grip points) each of which has coordinates for detecting a touch. In diagram 510 shown in FIG. 5A (diagram 540 shown in FIG. 5C), the numbers represent ADC code values detected in individual cells. In diagram 520 shown in FIG. 5A (diagram 550 shown in FIG. 5C), the numbers represent values of changes of RAW values to ADC code values measured in individual cells. The process of adding the changes in capacitance may include a process of obtaining ADC code values of a contact region in the touch panel to which a touch is directly applied with a level of pressure, and a process of performing the calculation using the changes of the obtained values.

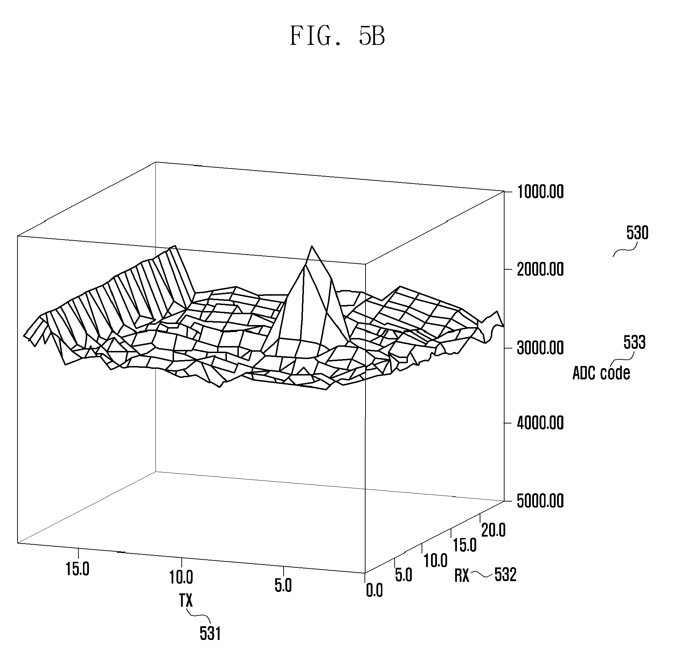

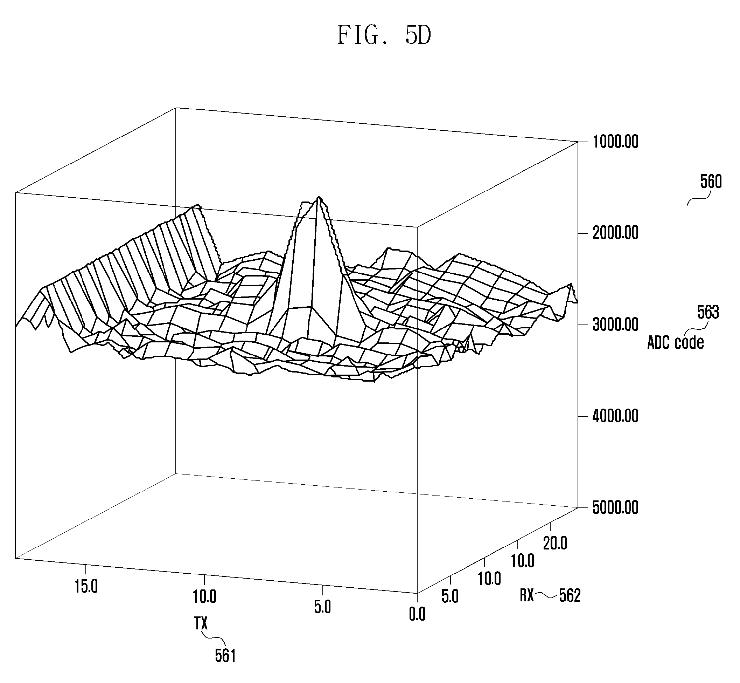

The graph 530 shown in FIG. 5B (graph 560 shown in FIG. 5D) represents changes according to touch coordinates on the touch panel. The TX axes 531 and 561 and the RX axes 532 and 562 represent the width and length of the touch panel of the electronic device, respectively. The Z axes 533 and 563 represent ADC code values measured at individual coordinates shown in diagram 510 (diagram 540). The sum of changes represent the volume of the three dimensional (3-D) graph 530 shown in FIG. 5B (560 shown in FIG. 5D). For example, the contour of the sum of changes, corresponding to a contact region of coordinates to which a touch is directly applied to, rises in the Z axis. In the comparison of graphs 530 and 560, the touch panel has a larger volume by a touch with a pressure of 1000 g-force as in graph 560 than by a touch with a pressure of 200 g-force as in graph 530.

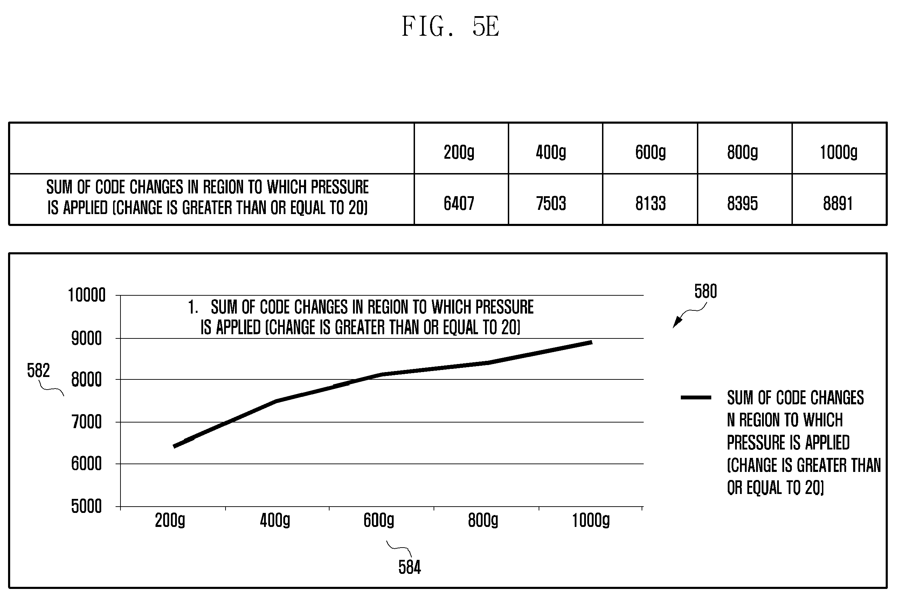

Referring to FIG. 5E, when the change in capacitance is calculated by the use of ADC code values of a contact area on the touch panel to which touch pressure is directly applied, it linearly correlates with pressure, which is shown as in graph 580. In graph 580, the Y-axis 582 represents the sum of changes in ADC code and the X-axis 584 represents the level of pressure (the intensity of touch) applied to a touch panel.

FIG. 5A shows tables when a touch with a pressure of 200 g-force is applied to the touch panel. As shown in FIG. 5A, the table 510 shows ADC code values of coordinates corresponding to the detected touch area formed in grid in the touch panel and the table 520 shows a variation of RAW values. In table 510, the ADC code values at the center area to which a direct touch is applied are relatively lower in number than those at the area (non-contact region) surrounding the contact region, to which a direct touch is not applied. In table 520 corresponding to the table 510, the variation to RAW values for the individual touch coordinates is described, based on the measured ADC code values. FIG. 5C shows tables when a touch with a pressure of 1000 g-force is applied to a touch panel. As shown in FIG. 5C, the table 540 shows ADC code values of coordinates corresponding to the detected touch are formed in grid in the touch panel and the table 550 shows a variation of RAW values by corresponding coordinates.

As described above, the process of adding changes in capacitance is performed, considering a contact region in the touch panel to which a particular object, e.g., fingers, is directly applied, and a non-contact region in the touch panel, to which a particular object is not directly applied.

FIGS. 6A to 6D illustrate diagrams that describe a method of calculating changes, using additional coordinates of a non-contact region to which a touch is not directly applied according to various embodiments of the present disclosure.

Referring to FIGS. 6A to 6D, compared with the embodiment referring to FIGS. 5A to 5E where the change is calculated using only data of a contact region to which a touch is directly applied, the embodiment referring to FIGS. 6A to 6D is implemented in such a way as to monitor the entire area of a touch panel, and calculate the change using data obtained by measuring a non-contact region to which a touch is not directly applied, as well as data obtained by measuring a contact region to which a touch is directly applied. From the TSP according to an embodiment of the present disclosure, a change in capacitance by the adjacent ground volume is measured and a change in capacitance by a metal structure (ground volume).

FIG. 6C shows diagrams of an electronic device to describe a bending phenomenon that occurs in a contact region on the TSP, to which a touch with pressure is applied to, and a gap that occurs in a non-contact region other than the contact region, which is caused by the bending effect, where the measurements at the non-contact region are inverse proportion to those at the contact region. Recent mobile terminals have been configured to have a structure in such a way that, when the display is facing above, the front glass 651 is located at the top,; a display panel 653 employing indium tin oxide (ITO), and the like, is placed beneath the front glass 651, and a hard housing 655 (or metal bracket) for supporting the glass and the panel, securing the endurance. The hard housing 655 is configured to have a structure available to the display (touch panel) part of which is soft. As shown in diagram 660 of FIG. 6C, when a touch of pressure is applied to the touch panel of the terminal, the contact region 670 receiving the direct touch of pressure is relatively deeper pressed. Meanwhile, the non-contact region 680 that does not receive the direct touch of pressure is relatively lifted up.

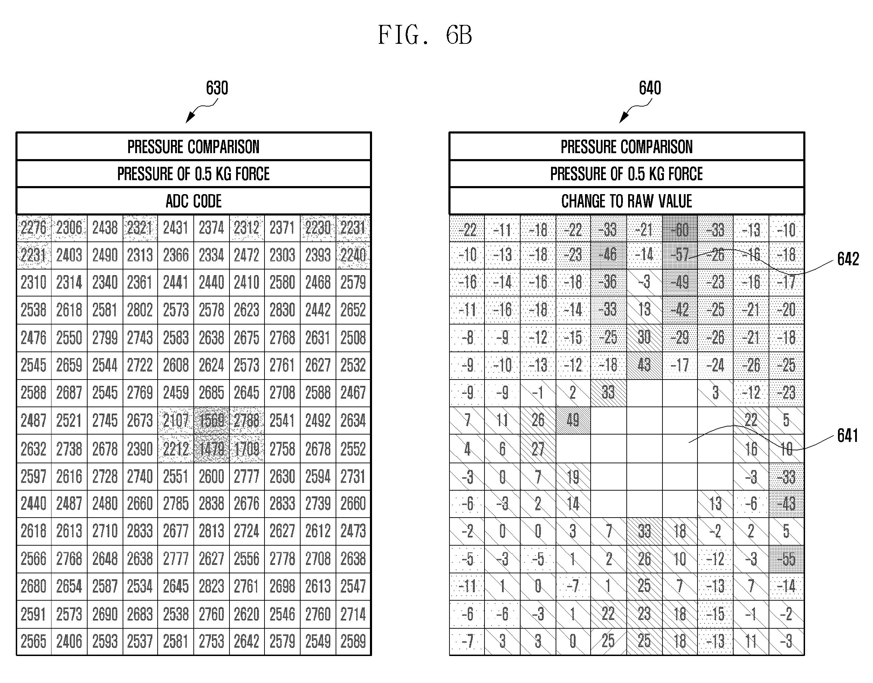

FIGS. 6A and 6B show measurements of pressure values applied to the touch panel. Diagrams 610 (630) and 620 (640) show a number of cells in a touch panel and changes and ADC values according to pressure detected in the individual cells. The numbers described in diagrams 610 and 630 represent ADC code values detected in individual cells. The numbers described in diagrams 620 and 640 represent values of changes of RAW values to ADC code values measured by individual cells. In diagram 620 shown in FIG. 6A and diagram 640 shown in FIG. 6B, it will be appreciated that the change in capacitance is created in non-contact regions 622 and 642, other than contact regions 621 and 641 which receive a direct touch with pressure. Therefore, the entire area of the touch panel is monitored and data obtained from the contact regions 621 and 641 and data obtained from the non-contact regions 622, 642 are used to calculate change in capacitance, thereby obtaining a more accurate change in capacitance.

Referring to FIG. 6D, when the change in capacitance 696 is calculated using ADC code values of a non-contact region on the touch panel to which a touch with pressure is not directly applied, the value 696 has the linearity with pressure 697. The data obtained using ADC code values of a non-contact region may be used to correct the values obtained from the contact region.

Although the embodiment is described in such a way that the relationship between the value 696 obtained from a non-contact region and pressure 697 is linear (or inverse proportional, it should be understood that the present disclosure is not limited thereto. For example, the embodiment may be modified in such a way that the value 696 obtained from a non-contact region is proportional to pressure 697 according to the design of a touch panel. Therefore, the embodiment is capable of obtaining various correlations between the contact region to which a touch is directly applied and the values of change, based on the monitoring result of the entire area of a touch panel, thereby increasing the degree of precision of measurement using the correlations.

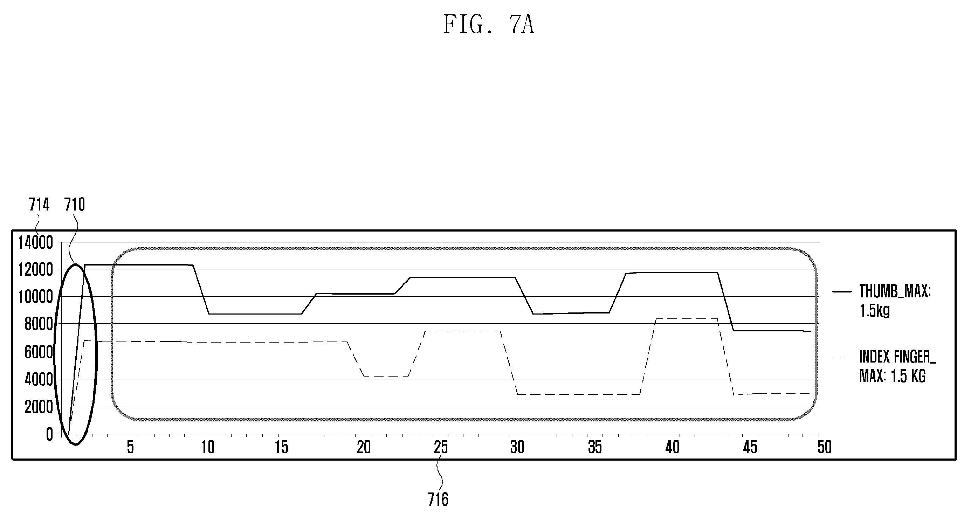

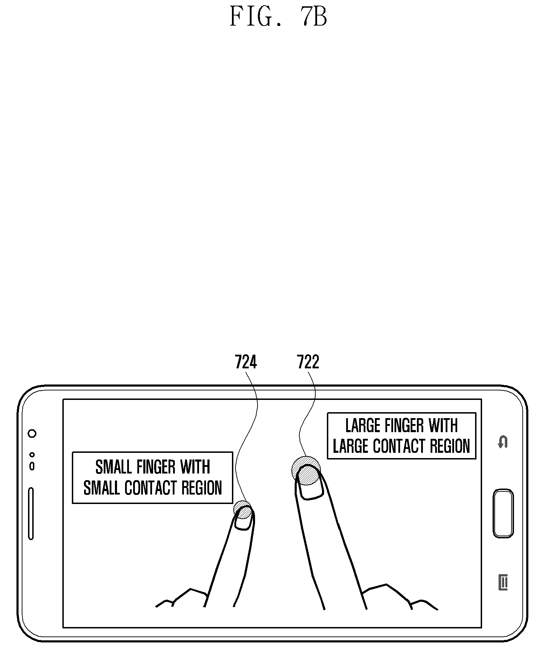

FIGS. 7A and 7B illustrate a graph of a calculation result of changes of ADC CODE detected by a touch over a certain period of time, according to various embodiments of the present disclosure.

Referring to FIG. 7A, a graph of a calculation result 714 of changes of ADC code created by touches over time 716 is illustrated, according to various embodiments of the present disclosure. The calculation result of changes refers to the sum of changes in capacitance but is not limited thereto. The calculation result may be obtained in various calculation methods. In the embodiment of the present disclosure, the scan frequency of the TSP IC may be approximately 90 Hz, or a cycle of approximately 10ms. However, it should be understood that the present disclosure is not limited by the measurement cycle, and the like. In the graph, time 716 of the X-axis is expressed by positive integers for relative values to show the linearity of change, without employing any particular unit.

In various embodiments for detecting pressure via touch sensors, the change in capacitance may vary depending on users or fingers of the same user. For example, the contact region against a touch panel may vary in area depending on man's fingers, woman's fingers, a velocity of a user's touch, intensity of touch, age of user, and the like. For even one person, the change in capacitance may vary depending on fingers, and this is because the touch panel may receive different pressure by fingers. Graph shown in FIG. 7A describes a method of correcting differences by the factors described above. The correction of a difference in change may be implemented by calculating the slope of changes created at the beginning of a touch.

As shown in FIG. 7A, graphs indicate that, when users apply real touches to a touch panel, the calculation results 714 of the measurements have steep rises at the beginning 710, and the times approaching the individual maximum values are approximately identical to each other, although the users' touch velocities and touch intensities differ from each other. For example, at the beginning of touch, the slope of changes is closely correlated with the contact area, regardless of types of touches. For example, when a user applies a touch to the touch panel with the thumb of the right hand, the touch velocity, such as a fast or slow press against the touch panel, does not dominantly affect the value of changes. In addition, the level of press touch gesture, such as a strong or weak press against the touch panel, does not dominantly affect the value of changes. Therefore, when the thumb of the right hand touches a touch panel, the touch panel has the same value in the slope of changes regardless of the type of touches. This is because the change at the beginning of touch is affected by the effect of change in area measured from the beginning of a finger's touch to a particular time point.

Referring to FIG. 7B, a diagram is illustrated that describes the obtainment of different measurements of the slope of changes of different fingers' touches applied to a touch panel at the beginning. As shown in FIG. 7B, when a relatively large finger 722 contacts the touch panel with a relatively large contact region, the change in contact area measured from the beginning of touch to a particular time may be obtained using a first contact area when the large finger 722 touches the touch panel at the beginning and a last contact area after a preset period of time has elapsed. The change in contact area of the finger 722 may be larger than that of a relatively small finger 724.

The processor determines a rate of change in capacitance caused by a user input for a selected period of time (e.g., less than 40 ms). When the processor ascertains that the determined rate of change in capacitance is a first rate, it compares the sum of changes in capacitance (a calculation value of ADC code changes) with a first reference value to determine a level of pressure.

Referring back to FIG. 7A, when a user applies a touch to the touch panel with the thumb of the right hand, the calculation results of the measurement have steep rises at the beginning 710. After the selected period of time has elapsed, the calculation value of ADC code changes maintains a certain level. For example, when a selected period of time has elapsed since a user applied a touch of 1500 g-force to the touch panel with the thumb, the calculation value of changes is measured as 12,000. When the degree of pressing the touch panel by the thumb is reduced (the thumb's pressure against the touch panel is reduced), the calculation of changes also becomes a small value. When the degree of pressing the touch panel by the thumb is increased from the reduced point to 1500 g-force, the calculation value is obtained as 12,000 again.

This result may also be obtained in the same manner from a case where the index finger applies a touch to the touch panel. When the index finger applies a touch of pressure of 1,500 g-force to the touch panel, the slope of changes at the beginning has a steep rise and then the calculation value of approximately 7,000 is obtained. When the degree of pressing the touch panel is reduced, the calculation value is decreased to approximately 4,000. When the degree of pressing the touch panel is increased from the reduced point to 1,500 g-force, the calculation value is obtained as approximately 7,000 again.

These results are features which appear because the change in contact area of a finger touching the touch panel has a particular value. Although the embodiment is described based on finger touch, it should be understood that the present disclosure is not limited thereto. It should be understood that the present disclosure can also be applied to various types of tools touching touch panels, varying the contact area, e.g., stylus pens, and the like

FIG. 8 is a reference value table for determining a level of pressure, based on a sum of capacitance changes according to various embodiments of the present disclosure. Reference values in the table, as default values, are stored in a memory of mobile terminals and used by users. When the processor of a new mobile terminal receives a user's touch inputs, it transmits corresponding signals to a server or a cloud server via a network and receives reference values therefrom. Thereafter, the mobile terminal updates the table with the received reference values to meet the user's request.

Referring to FIG. 8, the reference value table is described referring to the graph shown in FIG. 7A. As described above referring to FIG. 7A, data related to the change in capacitance by the thumb and index finger are described in the table. The calculation values of changes in measurements of pressure by the thumb (or the sum of changes in capacitance) have steeper slopes at the beginning than those by the index finger. When the slope values at the beginning are compared with the reference values in the table, a matching level of pressure can be determined. For example, the slope of calculation values by the thumb at the begging may be 11. The slope of calculation values by the index finger at the begging may also be 5. Levels of pressure matching the two slopes at the beginning by the thumb and index finger may be obtained, referring to the reference value table. In the embodiment described above, the slope of calculation values by the thumb at the begging is 11 and the calculation value of change in measurement is 12,000. When the values are compared with reference values in the table, pressure by the thumb is 1500 g-force and this is within a range of levels of pressure. In the embodiment described above, the slope of calculation values by the index finger at the begging is 5 and the calculation value of changes in measurement is 6,000. In this case, pressure by the index finger is 1500 g-force and this is within a range of levels of pressure. As described above, the reference value table may be optimally updated according to users. Alternatively, the reference value table may also be designed in such a way that it learns a user's input patterns to increase the accuracy.

In a slope table 810, the initial slope change is categorized by type 1 to type 10, however, it may be arranged according to users. Alternatively, the initial slope change may be calculated, based on a simple slope measured from the graph shown in FIG. 7A. Alternatively, the initial slope change may also be calculated by applying weights to changes in initial touch area.

In a pressure table 820, the range of change in capacitance for individual cells is set to 500, but is not limited thereto. The range of change in capacitance may be adjusted by a user's input initial touch value. The pressure value measured by a method according to the present disclosure is used to compare relative sizes between input touches. The pressure value may also be used for a method of accumulating data, learning via the data, and measuring the absolute pressure or weight of a user's touch.

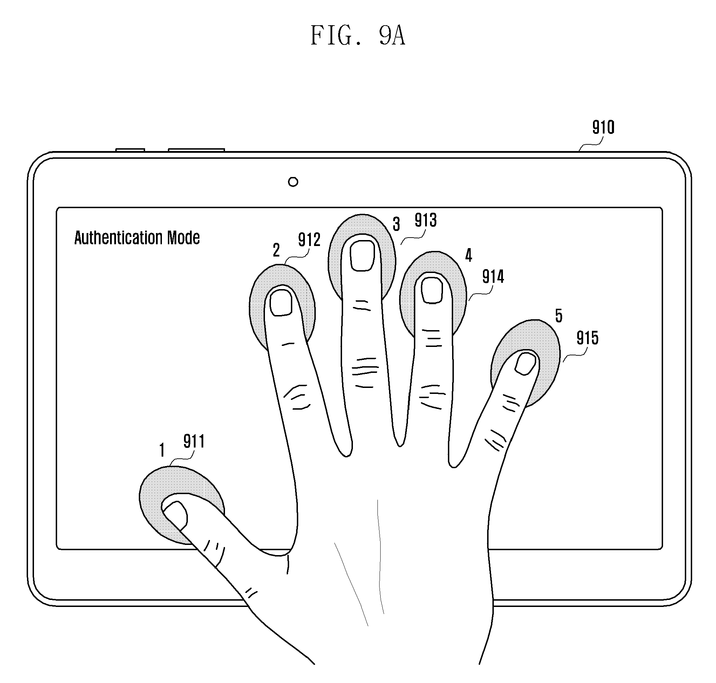

FIGS. 9A to 9C are diagrams that describe a method of updating reference values, considering user inputs, according to various embodiments of the present disclosure.

Referring to FIGS. 9A to 9C, as described above, the reference value table used to determine a level of pressure may be stored in a memory of a mobile terminal. Since measurements of touch may vary according to users or fingers, the reference values need to be updated. The following description provides a method of updating reference values.

As shown in FIG. 9A, when a mobile terminal 910 receives touch inputs by a user's fingers, it may create different contact areas according to the fingers. In general, a touch by the thumb 911 may have the largest ACD code change. The ADC code change in a touch panel according to the index finger 912, middle finger 913, ring finger 914 and little finger 915 may not be determined according to contact size of fingers or the order of fingers. In an embodiment of the present disclosure, since ADC code changes, input by individual fingers, differ from each other, a finger touching the touch panel can be identified.

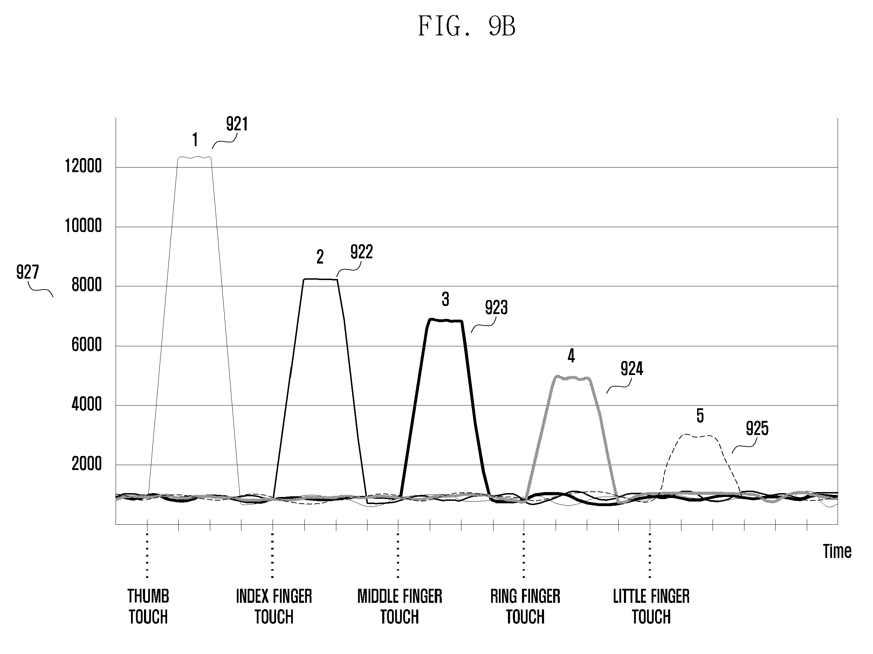

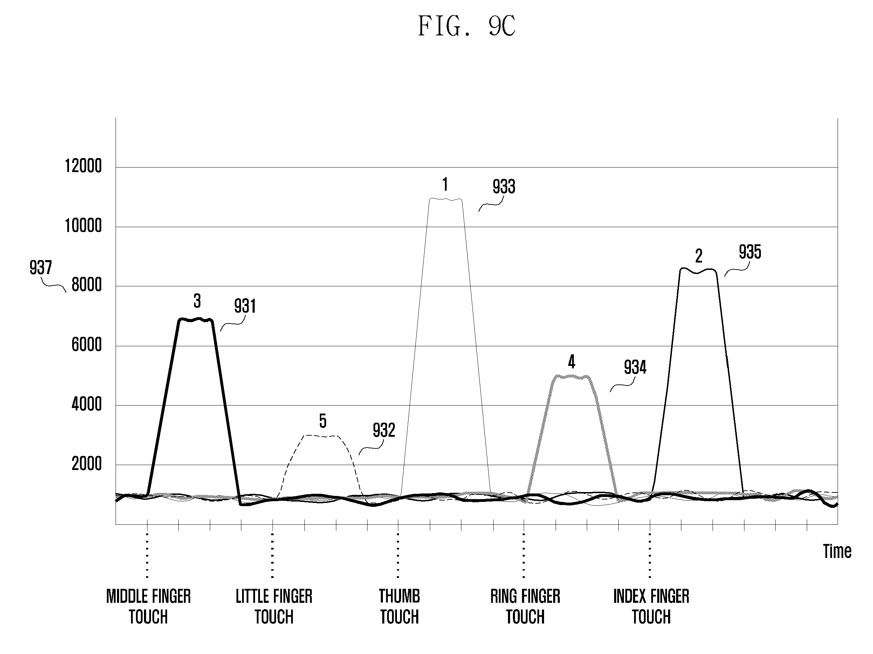

The processor of a mobile terminal receives a user's input touch pattern or measurements of a finger's touches at the beginning or a periodically. FIGS. 9B and 9B show graphs 927 and 937 corresponding to inputs that the processor has received from a user's individual fingers via the touch panel. Graphs 927 and 937 represent the calculation values of ADC code changes of inputs by a user's individual fingers (or calculation values of change in measurements). In order to increase the degree of measurement accuracy, the processor may receive inputs in order of fingers as shown in FIG. 9C, which differs from the order of fingers shown in FIG. 9B. In an embodiment of the present disclosure, when the processor receives inputs in order of the thumb 911, index finger 912, middle finger 913, ring finger 914, and little finger 915, the calculation value is obtained as in graph shown in FIG. 9B. The graph shown in FIG. 9B may be obtained in such a way that different fingers apply touches 921 to 925 to the same location on the touch panel every a certain time interval and then the ADC code changes of the different fingers are measured. Alternatively, the graph shown in FIG. 9B may be obtained in such a way that different fingers apply touches to the different locations on the touch panel as shown in FIG. 9A, and then the ADC code changes of the different fingers are measured. According to an embodiment of the present disclosure, the processor is capable of identifying a finger or fingers touching the touch panel, and the identification results are independent of the timings and the locations that touch inputs are applied to.

FIG. 9C shows a graph of a number of touch inputs 931 to 935 which are applied to the touch panel in a certain order, according to another embodiment. The levels of pressure and the order of the individual touch inputs are processed as a pattern and stored in the memory. The stored pattern of touch inputs may be used as a user authentication system which will be described later. For example, in a state where a pattern of touch inputs has been set as an unlock pattern for unlocking a mobile terminal, when the mobile terminal receives touch inputs, it compares the input pattern of touch inputs with the stored pattern. For example, when the mobile terminal receives touch inputs in a stored order of touch inputs within an allowance range, it may be unlocked. For example, when a mobile terminal sets the password as a pattern shown in FIG. 9C, it may be 3-5-1-4-2.

In another embodiment of the present disclosure, the processor stores, as a personal profile, a pattern or data, calculated from a user's inputs, in the memory. The processor transmits the person profile to a cloud server or a server in the network via the communication unit of the electronic device, and receives reference values, optimized to the user's registered pattern or the change in measurements by the user's fingers, from the cloud server or the server. The processor updates the reference values in the memory with the received reference values, thereby providing more precise levels of pressure to the mobile terminal user. Examples of the update method are a method of updating data stored in the mobile terminal, a method of transmitting/receiving data in real-time via a data communication network, without storing data in the mobile terminal, and providing optimized values to the mobile terminal user, a method of updating a personal profile by backing-up data in a cloud server.

The following description provides a method of inputting a personal profile according to another embodiment of the present disclosure, referring to FIG. 9A. The mobile terminal displays a personal profile input screen showing the order and location of a user's inputs. The input order and input location may be automatically determined in such a way that, when the user places the hand or fingers on the display (touch panel), the processor detects and analyzes the arrangement of fingers and sets the touch locations of the fingers. When the user applies touch pressure to the touch panel in the input order or input location, the processor analyzes the slope of pressure and the distribution of capacitance change and updates the personal profile based on the analysis. For example, the processor updates individual levels of pressure in the table, using a preset calculation formula, based on the slope change of pressure and the maximum change in capacitance, updated on the personal profile input screen.

Referring to the graphs shown in FIGS. 9B and 9C, the slope change and the ADC code change related to the individual fingers are obtained via the process of inputting a personal profile. The pattern in pressure change may be set using the slope change and the ADC code change. The pattern in pressure change may also be used for user authentication as described above. When the input order is used for user authentication along with the pattern in pressure change pressure, this may improve the security of user identification information. In order to perform user authentication, the user may apply touch pressure against the touch panel with fingers one by one. Alternatively, the user may place all the fingers on the touch panel and apply pressure thereto. These methods produce a result with a relatively high degree of accuracy. The recognition of the slope change may be performed according the detection cycle of the touch sensor, e.g., a unit of a few milliseconds.

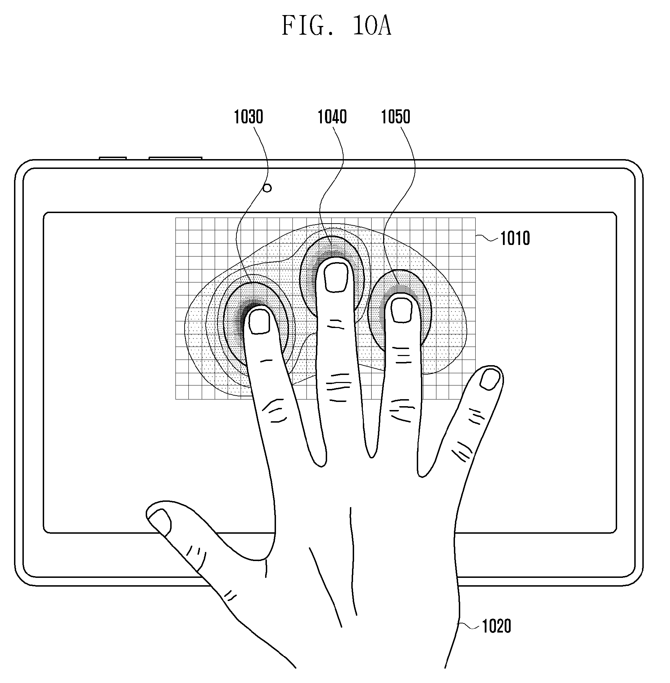

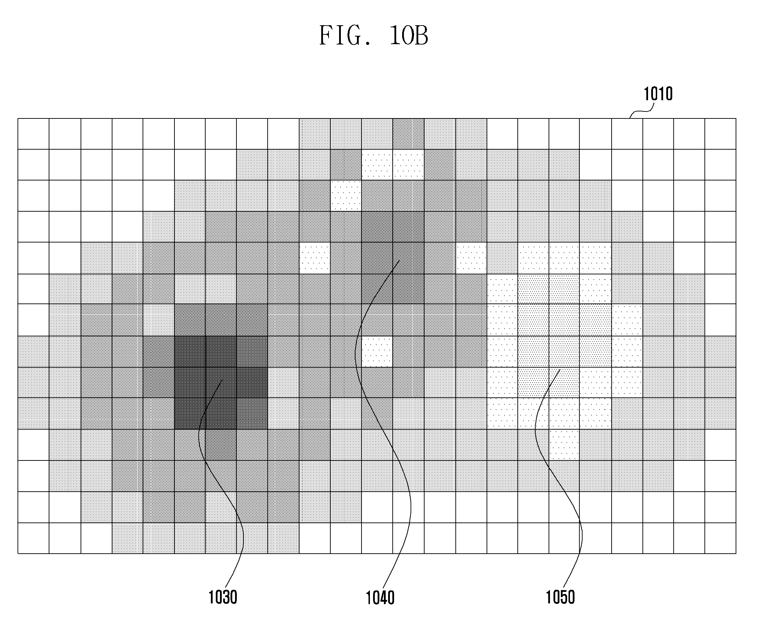

FIGS. 10A and 10B are diagrams illustrating a method of detecting pressure corresponding to multi-touch inputs according to various embodiments of the present disclosure. When multi-touches are applied to a touch panel, inputs by the multi-touches are detected and functions corresponding to the number of detected multi-touch inputs are performed. The embodiment of the present disclosure detects pressure of multi-touches and applies the detected result to various types of interface, such as user interface (UI), user experience (UX), and the like.

Referring to FIGS. 10A and 10B, in the embodiment of the present disclosure, when pressure by multi-touches is applied to the TSP, the TSP may have an abnormal distribution of pressure for ADC code changes. Since the abnormal distributions of pressure may be obtained by particular values according to users respectively, they may be used for a personal authentication system. This personal authentication system is a system that authenticates a user by using one hand 1020 touching a TSP in such a way as to detect the differences between levels of grasping power and between levels of fingers pressing against the TSP. For example, this personal authentication system performs user authentication using a unique pattern of pressure produced by multi-touches. Referring to FIG. 10A, a user locates the hand 1020 above a TSP 1010 and applies pressure of touch inputs by three fingers to the TSP 1010. In the embodiment of the present disclosure, the three fingers 1030, 1040, and 1050 simultaneously apply touch inputs with pressure to the TSP 1010. Alternatively, the three fingers 1030, 1040, and 1050 may also apply touch inputs with pressure to the TSP 1010, one by one, in an order, every a certain time interval, which forms a pattern of touch inputs, as an additional input. For example, the electronic device receives a pattern of touch inputs in a distribution of touch pressure as shown in FIG. 10B and sets the distribution of touch pressure as authentication data. When the electronic device receives multi-touches via the TSP, it may additionally extract data of pressure from interaction between the received multi-touches, which differ from data of pressure by one finger's touch, and may also use the additional extracted data for user authentication.

Although the multi-touch detecting method according to an embodiment of the present disclosure is applied to user authentication, it should be understood that the present disclosure is not limited thereto. For example, the multi-touch detecting method may be applied to applications related to musical instruments, e.g., a piano, in such a way that a piano piece is played according to levels of touch pressure. The multi-touch detecting method may also be applied to game applications, e.g., a car racing game, in such a way that the accelerator or the brake of a car is controlled according to levels of touch pressure.

In an embodiment of the present disclosure, a method of detecting pressure by a touch sensor of an electronic device includes receiving a user input applied to at least part of a touch panel with a number of electrodes, adding changes in capacitance formed among at least part of the electrodes, in response to the user input, and determining a level of pressure of the user input against the touch panel, based on the sum of capacitance changes.

In the method according to an embodiment of the present disclosure, the determination of a level of pressure includes determining a rate of change in capacitance caused by the user input for a preset period of time, comparing, when the determined rate of change is a first rate, the sum of capacitance changes with a first reference value to determine the level of pressure, and comparing, when the determined rate of change is a second rate, the sum of capacitance changes with a second reference value to determine the level of pressure.

In the method according to an embodiment of the present disclosure, the method further includes storing the references values to be used to determine the level of pressure in a memory.

In the method according to an embodiment of the present disclosure, the storage of the references values incudes receiving touch pressure of user's individual fingers, transmitting data corresponding to the received touch pressure to a server, receiving a reference value matching the data from the server, and updating reference values stored in the memory, using the received reference value.

In the method according to an embodiment of the present disclosure, the method further includes setting a pattern of change in touch pressure of the user's fingers, based on the updated reference values, and storing the user identification information matching the pattern.

In the method according to an embodiment of the present disclosure, the addition of changes in capacitance includes adding changes in capacitance formed between electrodes corresponding to areas of the touch panel to which touches are directly applied to.

In the method according to an embodiment of the present disclosure, the addition of changes in capacitance includes correcting the sum of capacitance changes by further including a change in capacitance formed between electrodes corresponding to areas of the touch panel to which touches are not directly applied.

In the method according to an embodiment of the present disclosure, the determination of a level of pressure of the user input includes receiving multi-touches applied to at least part of the touch panel, adding changes in capacitance formed by the multi-touches, and comparing the sum of capacitance changes by the multi-touches with a reference value to determine the level of pressure.

According to various embodiment of the present disclosure, the mobile terminal (electronic device) is capable of detecting change in pressure using the built-in touch sensors, without requiring a sensor for detecting change in capacitance according to pressure. Therefore, the mobile terminal removes manufacturing costs which may be caused by employing pressure sensors. The mobile terminal also reduces the thickness by removing a gap secured for the installation of pressure sensors between two electrodes.

The above-discussed method is described herein with reference to flowchart illustrations of user interfaces, methods, and computer program products according to embodiments of the present disclosure. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which are executed via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operations to be performed on the computer or other programmable apparatus to produce a computer implemented process such that the instructions that are executed on the computer or other programmable apparatus provide operations for implementing the functions specified in the flowchart block or blocks.

And each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

Certain aspects of the present disclosure can also be embodied as computer readable code on a non-transitory computer readable recording medium. A non-transitory computer readable recording medium is any data storage device that can store data which can be thereafter read by a computer system. Examples of the non-transitory computer readable recording medium include a Read-Only Memory (ROM), a Random-Access Memory (RAM), Compact Disc-ROMs (CD-ROMs), magnetic tapes, floppy disks, and optical data storage devices. The non-transitory computer readable recording medium can also be distributed over network coupled computer systems so that the computer readable code is stored and executed in a distributed fashion. In addition, functional programs, code, and code segments for accomplishing the present disclosure can be easily construed by programmers skilled in the art to which the present disclosure pertains.

At this point it should be noted that the various embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include a ROM, a RAM, CD-ROMs, magnetic tapes, floppy disks, and optical data storage devices. The processor readable mediums can also be distributed over network coupled computer systems so that the instructions are stored and executed in a distributed fashion. In addition, functional computer programs, instructions, and instruction segments for accomplishing the present disclosure can be easily construed by programmers skilled in the art to which the present disclosure pertains.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. An electronic device comprising:
a display;
a touch panel with a number of electrodes, placed on the display;
a processor electrically connected to the display and the touch panel; and
a memory electrically connected to the processor,
wherein the memory stores instructions which enable the processor to:
receive a user input applied to at least part of the touch panel,
add changes in capacitance formed among at least part of the electrodes, in response to the user input, and
determine a level of pressure of the user input against the touch panel, based on a sum of capacitance changes.

2. The electronic device of claim 1, wherein the instructions enable the processor to:
determine a rate of change in capacitance caused by the user input for a preset period of time,
compare, when the determined rate of change is a first rate, the sum of capacitance changes with a first reference value to determine the level of pressure, and
compare, when the determined rate of change is a second rate, the sum of capacitance changes with a second reference value to determine the level of pressure.

3. The electronic device of claim 2, wherein the references values that the processor uses to determine the level of pressure are determined in a process of designing the electronic device and stored in the memory.

4. The electronic device of claim 3, wherein the processor is configured to:
receive touch pressure of a user's individual fingers,
transmit data corresponding to the received touch pressure to a server,
receive a reference value matching the data from the server, and
update reference values stored in the memory, using the received reference value.

5. The electronic device of claim 4, wherein the processor is further is configured to:
set a pattern of change in touch pressure of the user's fingers, based on the updated reference values, and
store the user identification information matching the pattern.

6. The electronic device of claim 1, wherein the sum of capacitance changes is produced by adding changes in capacitance formed between electrodes corresponding to areas of the touch panel to which touches are directly applied to.

7. The electronic device of claim 6, wherein the sum of capacitance changes is corrected by further including a change in capacitance formed between electrodes of areas of the touch panel to which touches are not directly applied.

8. The electronic device of claim 2, wherein the instructions enable the processor to:
receive multi-touches applied to at least part of the touch panel,
add changes in capacitance formed by the multi-touches,
compare the sum of capacitance changes by the multi-touches with a reference value, and
determine the level of pressure based on the comparison result.

9. A method of detecting pressure by a touch sensor of an electronic device, the method comprising:
receiving a user input applied to at least part of a touch panel with a number of electrodes;
adding changes in capacitance formed among at least part of the electrodes, in response to the user input; and
determining a level of pressure of the user input against the touch panel, based on a sum of capacitance changes.

10. The method of claim 9, wherein the determining of the level of pressure comprises:
determining a rate of change in capacitance caused by the user input for a preset period of time;
comparing, when the determined rate of change is a first rate, the sum of capacitance changes with a first reference value to determine the level of pressure; and
comparing, when the determined rate of change is a second rate, the sum of capacitance changes with a second reference value to determine the level of pressure.

11. The method of claim 10, further comprising:
storing the references values to be used to determine the level of pressure in a memory.

12. The method of claim 11, wherein the storing of the references values comprises:
receiving touch pressure of a user's individual fingers;
transmitting data corresponding to the received touch pressure to a server;
receiving a reference value matching the data from the server; and
updating reference values stored in the memory, using the received reference value.

13. The method of claim 12, further comprising:
setting a pattern of change in touch pressure of the user's fingers, based on the updated reference values; and
storing the user identification information matching the pattern.

14. The method of claim 9, wherein the adding of the changes in capacitance comprises:
adding changes in capacitance formed between electrodes corresponding to areas of the touch panel to which touches are directly applied to.

15. The method of claim 14, wherein the adding of the changes in capacitance comprises:
correcting the sum of capacitance changes by further including a change in capacitance formed between electrodes corresponding to areas of the touch panel to which touches are not directly applied.
